# EUROPÄISCHE PATENTSCHRIFT

(11) **EP 1 303 653 B1**
(45) Veröffentlichungstag und Bekanntmachung des Hinweises auf die Patenterteilung: **22.02.2006**
(21) Anmeldenummer: 01960537.7
(22) Anmeldetag: 24.07.2001
(51) Int. Cl.: D01H 9/18, B65G 1/04

(54) **FÖRDEREINRICHTUNG FÜR KANNEN IN EINEM KANNENLAGER**
CONVEYOR FOR TRANSPORTING CANS IN A CANNING FACTORY
DISPOSITIF DE TRANSPORT DE CONTENANTS DANS UN ENTREPOT DE CONTENANTS

(30) Priorität: 27.07.2000 DE 20013068 U
(43) Veröffentlichungstag der Anmeldung: 23.04.2003
(73) Patentinhaber: Autefa Automation GmbH, 86316 Friedberg (DE)
(72) Erfinder: HIRSCHEK, Herwig, 86399 Bobingen (DE)
(74) Vertreter: Ernicke, Klaus Stefan
(86) Internationale Anmeldenummer: PCT/EP2001/008502
(87) Internationale Veröffentlichungsnummer: WO 2002/010491

(56) Entgegenhaltungen:
- DE-A- 19 713 859
- US-A- 5 634 316
- US-A- 5 967 728
- "SATELLITE WAREHOUSE OPTIMIZES STORAGE VOLUME" FORDERN UND HEBEN, KRAUSSKOPF VERLAG FUR WIRTSCHAFT. MAINZ, DE, Bd. 42, 1992, Seite 25 XP000257665 ISSN: 0341-2636

## Beschreibung

Die Erfindung betrifft ein Kannenlager mit mindestens einer Fördereinrichtung für Kannen, die zur Aufnahme von Fasermaterial bestimmt sind, mit den Merkmalen im Oberbegriff des Hauptanspruchs.

Ein solches Kannenlager ist aus der DE-A-197 13 859 bekannt. Das Kannenlager besitzt einen Lagerspeicher mit einem integrierten Kannenfördersystem zur beweglichen Aufnahme und zum Transport von Kannengruppen mit wechselnden Förderrichtungen. Vor dem Kannenspeicher sind mehrere Streckmaschinen mit jeweils einem zugehörigen Kannenabtafler angeordnet, die jeweils an einen Streckenspeicher angeschlossen sind, der als Pufferspeicher dient. Der Streckenspeicher nimmt leere und volle Kannen auf und hat außerdem einige Leerplätze. Die aufgereihten Streckenspeicher sind mittels eines quer verfahrbaren Strecken-Verschiebewagens mit dem Lagerspeicher verbunden. Auf der gegenüber liegenden Seite ist der Lagerspeicher an einen zweiten Kannenförderer mit einem Verschiebewagen angeschlossen, der die Kannen wechselt und an mehrere Maschinenspeicher übergibt, von denen die Kannen an eine zugeordnete Spinnmaschine über einen Kannenwechselwagen weiter transportiert werden können. Hierbei lassen sich außerdem an den Spinnmaschinen geleerte Kannen gegen volle Kannen austauschen und die leeren Kannen in der vorbeschriebenen Weise in umgekehrter Richtung zu den Streckmaschinen für eine erneute Befüllung zurücktransportieren. Alle Fördersysteme sind als Durchlaufförderer mit jeweils eigenen Fördergeräten ausgestattet. Diese Einzelförderer können als Kettenförderer, Verschiebewagen mit Wechseleinrichtungen oder dergleichen ausgebildet sein. Das gesamte Transport-und Lagersystem bedingt einen hohen Bau- und Steueraufwand. Außerdem ergeben sich Verschleiß- und Wartungsprobleme.

Aus der Literaturstelle "Satellite Warehouse Optimizes Storage Volume" in FÖRDERN UND HEBEN, Krausskopf Verlag für Wirtschaft. Mainz, DE, Bd. 42, 1992, Seite 25 ist ein Satellitenförderer für ein Hochregallager in Warenhäusern bekannt. Es dient zum Transport von beladenen Paletten in und aus den Regalfächern.

Es ist Aufgabe der vorliegenden Erfindung, ein mit einer verbesserten Fördereinrichtung ausgestattetes Kannenlager aufzuzeigen.

Die Erfindung löst diese Aufgabe mit den Merkmalen im Hauptanspruch.
Die Erfindung sieht vor, die Fördereinrichtung als Satellitenförderer auszubilden. Hierbei können im Kannenlager mehrere Satellitenförderer angeordnet sein. Satellitenförderer haben den Vorteil eines wesentlich geringeren Bau- und Steueraufwands im Vergleich zu den vorbekannten Einzelförderern und sind kostengünstiger. Dies betrifft sowohl die Fördergeräte, insbesondere die Verschiebewagen und Satelliten, wie auch deren stationäre Führungen. Die Satellitenförderer sind außerdem sehr flexibel, wartungs- und montagefreundlich. Mit einem Satellitenförderer können auch große Kannengatter mit langen Gassen oder Reihen bedient werden. Zudem können die Kannen auf den Satelliten besonders schonend transportiert und abgesetzt beziehungsweise aufgenommen werden. Auch die Positioniergenauigkeit ist im Vergleich zu vorbekannten Fördereinrichtungen sehr hoch.

Der Satellitenförderer hat vorzugsweise eine Verschiebeeinrichtung, insbesondere einen linear verfahrbaren Verschiebewagen, wobei sich der Satellit in Querrichtung dazu bewegt. Vorzugsweise kann der Satellit dabei nach zwei Seiten bewegt werden, wodurch ein lagerübergreifender Kannentransport ohne Wechselstationen möglich ist. Auch die Zahl der Satellitenförderer kann hierdurch verringert werden.

Die Satelliten können mit einer Versorgungseinrichtung per Kabelschlepp oder über Schleifstromübertrager gezielt mit Antriebsenergie und Steuersignalen versorgt werden, was vorzugsweise elektrisch geschieht.

Die Fördereinrichtung erlaubt ferner die Anordnung einer mehrachsigen Chargiereinrichtung unter Einbeziehung des Satellitenförderers an einem Kannenabtafler. Die Chargiereinrichtung bietet eine bessere, einfacher steuerbare und verschleißärmere Kinematik als vorbekannte taflereigene Konstruktionen.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Draufsicht auf ein Kannenlager mit mehreren Lagerbereichen und zwei Satellitenförderern,
- Figur 2:: eine Seitenansicht eines Satellits mit einer Kanne,
- Figur 3:: eine Seitenansicht einer einer Abzugseinrichtung für das Kannenlager,
- Figur 4:: eine Schemadarstellung eines Satellitentransports in vier Schritten a) bis e),
- Figur 5:: eine perspektivische Darstellung von Teilen des Satellitenförderers,
- Figur 6:: eine Variante des Kannenlagers von Figur 1 mit einem anderen Kannenabtafler mit Chargiereinrichtung und einer anderen Versorgungseinrichtung für die Satelliten,
- Figur 7:: eine vergrößerte Darstellung der Chargiereinrichtung von Figur 6 und
- Figur 8:: eine perspektivische Darstellung der anderen Versorgungseinrichtung für die Satelliten.

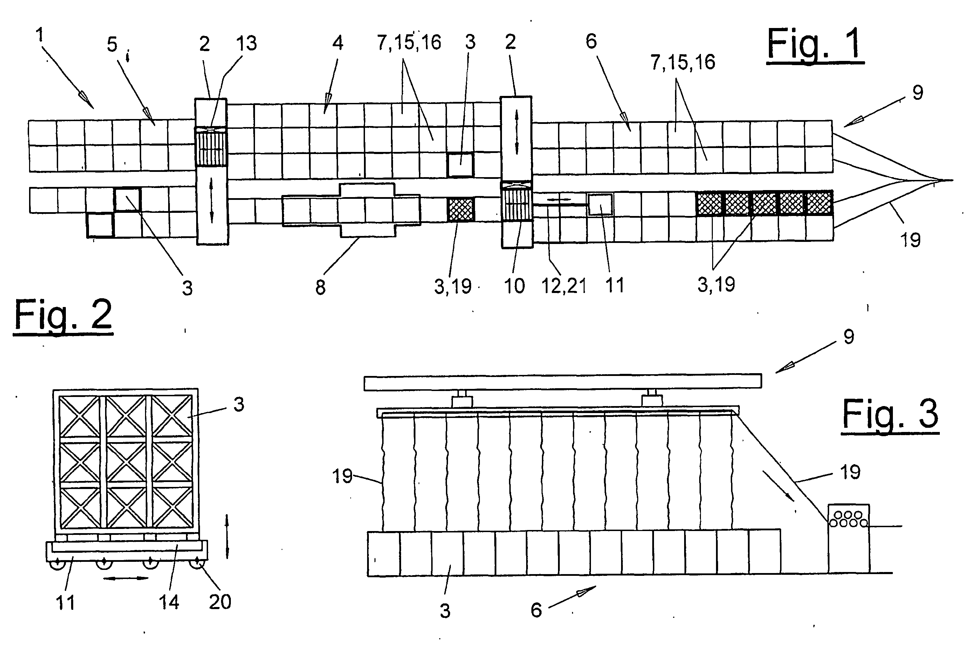

Figur 1 zeigt ein Kannenlager (1) für mehrere Kannen (3), die zur Aufnahme von Fasermaterial, insbesondere von Faserkabeln (19) bestimmt sind. Die Faserkabel (19) können zum Beispiel über einen Kannenabtafler (8) in die Kannen (3) gefüllt werden. Aus den befüllten Kannen wird anschließend das Faserkabel (19) über eine Abzugseinrichtung (9) wieder abgezogen und einer Faseranlage, insbesondere einer Streck- und Spinneinrichtung, (nicht dargestellt) zugeführt.

Das Kannenlager (1) besitzt ein oder mehrere Lagerbereiche (4,5) für leere Kannen (3) und einen Abzugsbereich (6) für befüllte Kannen (3), über dem die in Figur 3 beispielsweise dargestellte Abzugseinrichtung (9) angeordnet ist. Für den Transport der Kannen (3) im Kannenlager (1) sind ein oder mehrere Fördereinrichtungen (2) vorgesehen, die jeweils als Satellitenförderer ausgebildet sind. Die Erfindung betrifft sowohl die Satellitenförderer (2), wie auch ein mit solchen Förderern ausgestattetes Kannenlager (1).

Der Kannenabtafler (8) ist am Rande des einen Lagerbereichs (4) für die leeren Kannen (3) angeordnet. An diesen einen Lagerbereich (4) kann sich ein zweiter Lagerbereich (5) für leere Kannen (3) anschließen. Zwischen den beiden Lagerbereichen (4,5) ist ein Satellitenförderer (2) angeordnet, der vorzugsweise beide Lagerbereiche (4,5) und auch den Kannenabtafler (8) bedient und die Kannen (3) entsprechend hin- und hertransportiert. An der anderen Seite des Kannenlagers (1) schließt sich an den Lagerbereich (4) der Abzugsbereich (6) für die befüllten Kannen (3) an, wobei zwischen den beiden Bereichen (4,6) ein zweiter Satellitenförderer (2) angeordnet ist. Auch dieser Satellitenförderer (2) arbeitet beidseitig und kann beide Bereiche (4,6) und den Kannenabtafler (8) bedienen.

Die Lagerbereiche (4,5) und der Abzugsbereich (6) weisen jeweils ein regelmäßiges Kannengatter (7) auf, welches eine Art Raster zur gleichmäßigen Positionierung der Kannen (3) bildet. Das Kannengatter (7) besteht hierbei aus ein oder mehreren nebeneinander angeordneten Gassen oder Reihen von Lagerpositionen (15,16), die sich alle vorzugsweise in der gleichen Richtung erstrecken und die von den beiden Satellitenförderern (2) bedient werden.

Im Lagerbetrieb werden leere Kannen (3) am Kannenabtafler (8) mit dem Faserkabel (19) befüllt, wobei die leeren Kannen (3) aus den Lagerbereichen (4,5) vom linken Satellitenförderer (2) abgeholt und zum Kannenabtafler (8) transportiert werden. In den Lagerbereichen (4,5) können hierbei auch fehlerhafte Kannen, Kannen mit Faserausschussmaterial etc. abgestellt und zwischengelagert werden. Die vom Kannenabtafler (8) befüllten Kannen (3) werden dann vom zweiten rechten Satellitenförderer (2) in Figur 1 abgeholt und in den Abzugsbereich (6) gebracht. Die befüllten Kannen (3) sind durch eine Schraffur kenntlich gemacht.

Im Abzugsbereich (6) befinden sich zum Beispiel zwei Gassenpaare, in denen die Betriebsmodi Abzugsbetrieb und Lade/Entladebetrieb vorzugsweise abwechseln. Hierbei kann zum Beispiel das erste Gassenpaar nach und nach mit den beladenen Kannen (3) befüllt werden, während das zweite Gassenpaar bereits voll ist und im Abzugsbetrieb arbeitet. Bei dem zweiten vollen Gassenpaar werden die Faserkabel (19) aus den Kannen (3) entnommen, über Kopf zur stationären oder beweglichen Abzugseinrichtung (9) gebracht und von dieser zu einem gemeinsamen Strang zusammengeführt, der dann axial abgezogen und einer Streckmaschiene oder dgl. Weiterbehandlungseinrichtung vorgelegt wird.

Wenn die Kannen (3) des zweiten Gassenpaars geleert sind, wechselt der Betriebsmodus. Die Abzugseinrichtung (9) wandert zu den beladenen Kannen (3) im nunmehr vollen ersten Gassenpaar und beginnt dort den Abzugsbetrieb. Gleichzeitig werden die leeren Kannen (3) aus dem zweiten Gassenpaar vom Satellitenförderer (2) abtransportiert und in den Lagerbereich (4) verfrachtet. Anschließend werden dann wieder beladene Kannen (3) in die geleerte zweite Lagergasse befördert.

Die Satellitenförderer (2) bestehen jeweils aus einer Verschiebeeinrichtung (10), die quer zu den Lagergassen und quer zur Längsachse des Kannenlagers (1) ausgerichtet ist. Die Verschiebeeinrichtung (10) ist zum Beispiel als Verschiebewagen ausgebildet, der an den Stirnenden der Gassen entlang fahren kann. Auf dem Verschiebewagen (10) sind ein oder mehrere Satelliten (11) angeordnet, die ein Fahrwerk (20) mit Rädern oder Rollen aufweisen, mit dem sie in den Lagergassen fahren können. Hierbei sind an den Lagergassen ein oder mehrere seitliche Führungen (17) für die Satelliten (11) angebracht, die zum Beispiel als beidseitige Leitschienen für das Fahrwerk (20) ausgebildet sind. Am Satellit (11) oder auch am Verschiebewagen (10) kann eine geeignete Sensorik (18), wie zum Beispiel Lichttaster etc., angeordnet sein, die mit einer entsprechenden Steuerung verbunden ist, mittels der der Verschiebewagen (10) sich exakt an der Gassenmündung positionieren lässt.

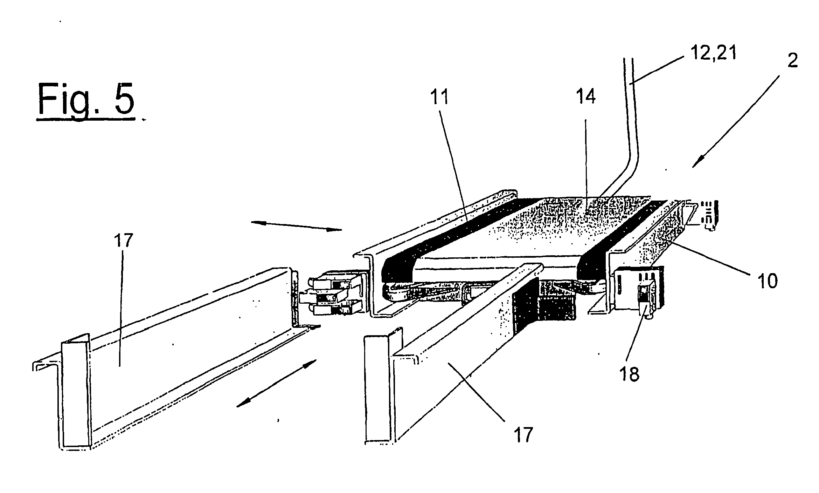

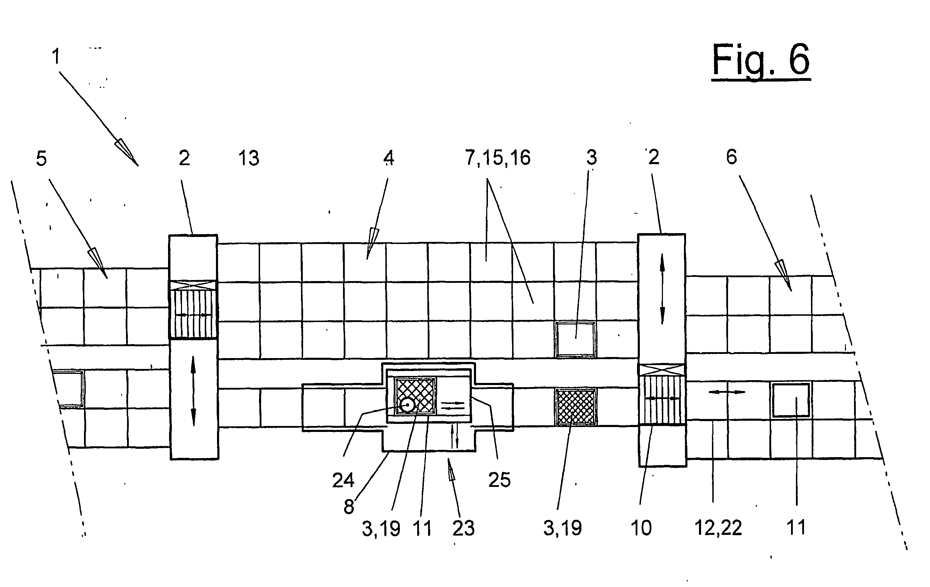

Die selbstfahrenden Satelliten (11) sind über eine Versorgungseinrichtung (12) mit der Verschiebeeinrichtung (10) verbunden und bekommen hierüber Energie und Steuersignale. Im Ausführungsbeispiel von Figur 1 bis 5 ist die Versorgungseinrichtung (12) z.B. als Kabelschlepp oder Versorgungsschlepp (21) ausgebildet. Figur 6 bis 8 zeigen eine Variante mit einem Schleifstromübertrager (22).

Die einzelnen Satelliten (11) sind jeweils mit einer Hubeinrichtung (14) ausgestattet, mit der die Kannen (3) angehoben und abgesenkt werden können. Die Größe der Satelliten (11) ist auf die Grundfläche von ein oder mehreren Kannen (3) abgestimmt. Die Breite der Hubeinrichtung (14) ist dabei kleiner als die Breite der Kannen (3) und auch kleiner als die lichte Weite zwischen den Leitschienen (17). Die Hubeinrichtung (14) kann dadurch mit ihrer obenliegenden Stützfläche zwischen den Schienen (17) auf- und abbewegt werden.

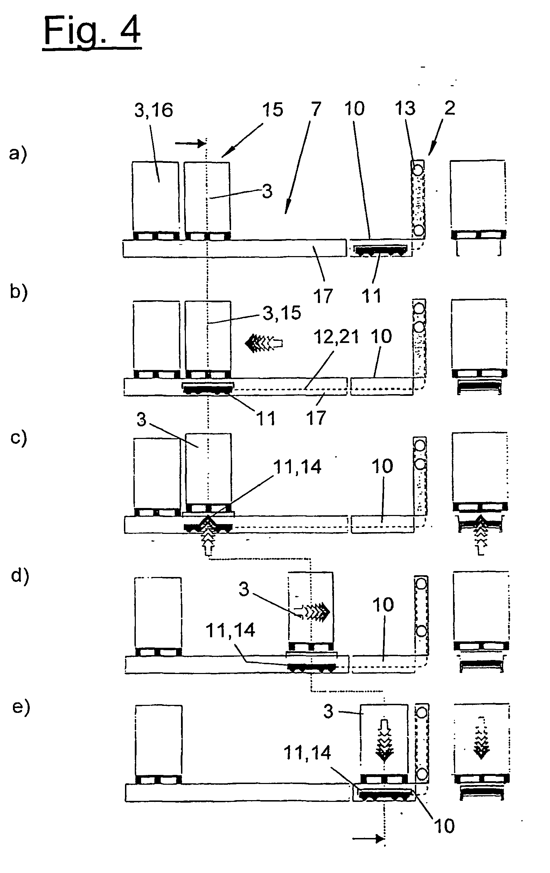

Die Satelliten (11) bewegen sich quer zur Verschiebeeinrichtung (10) beziehungsweise zu deren Bewegungsrichtung. In der bevorzugten Ausführungsform können die Satelliten (11) nach beiden Seiten, d.h. in Figur 1 nach links und nach rechts fahren. Für den Versorgungsschlepp (21) ist eine geeignete Wickeleinrichtung (13) vorhanden, die bei beidseitig verfahrbaren Satelliten (11) seitlich und mit Ausrichtung längs der Lagergassen am Verschiebewagen (10) angeordnet ist. Figur 1 zeigt diese Gestaltung. Bei einem einseitig verfahrbaren Satelliten (11) kann die Wickeleinrichtung (13) auch stirnseitig angeordnet sein, wie dies zum Beispiel Figur 4 zeigt.

Die Führung (17) beziehungsweise die beidseitigen Leitschienen bilden zugleich eine Abstützung für die Kannen (3) im Kannengatter (7). Der Satellit (11) kann mit seiner Hubeinrichtung (14) in abgesenkter Stellung die Schienenoberkante unterfahren und sich dadurch unter den dort aufsitzenden Kannen (3) hindurchbewegen. Mit der Hubeinrichtung (14) können dann die Kannen (3) durch Anheben aufgenommen, aufgeladen und in dieser Position vom Satellit (11) transportiert werden. Umgekehrt können die aufgeladenen Kannen (3) vom Satellit (11) durch Absenken der Hubeinrichtung (14) auf der Führung bzw. den Schienen (17) abgesetzt werden.

Figur 4 verdeutlicht einen Transportzyklus in fünf Schritten a) bis (e). Auf der Führung (17) sind hier zum Beispiel zwei Kannen (3) im Kannengatter (7) in den Lagerpositionen (15) und (16) angeordnet. Beim ersten Schritt a) wird zunächst der Verschiebewagen (10) mit seinem Satelliten (11) an der Mündung der betreffenden Lagergasse positioniert. Anschließend fährt im zweiten Schritt b) der Satellit (11) in die Lagergasse und bis unter die vordere Kanne (3) in der Lagerposition (15). Zur Steuerung der Satellitenbewegung ist vorzugsweise eine Wegmesseinrichtung (nicht dargestellt) am Satelliten (11) angeordnet. Diese steht mit einer Steuerung des Satellitenförderers (2) und darüber hinaus auch mit einer übergeordneten Steuerung des Kannenlagers (1) in Verbindung. Aus den Satellitenbewegungen und den zurückgelegten Strecken beziehungsweise den erreichten Positionen können Daten über die einzelnen Lagerpositionen der Kannen (3) gewonnen und verarbeitet werden. Alternativ können statt eines Wegemesssystems auch andere Mess- und Positioniereinrichtungen Verwendung finden.

Sobald der Satellit (11) die gewünschte Lagerposition (15) erreicht hat, bleibt er stehen und fährt seine Hubeinrichtung (14) aus, mit der er die Kanne (3) erfasst, die von der Führung (17) abgehoben und auf den Satelliten (11) geladen wird. Die Darstellung c) von Figur 4 zeigt diesen Schritt. Anschließend fährt gemäß Darstellung d) der Satellit (11) mit der aufgeladenen Kanne (3) zum Verschiebewagen (10) zurück, den er in der Position e) erreicht. Hier kann die Hubeinrichtung (14) wieder abgesenkt werden, wobei die Kanne (3) gegebenenfalls auf entsprechenden Stützschienen am Verschiebewagen (10) abgesetzt wird. Solche Schienen können dabei auch zur seitlichen Führung des Satelliten (11) dienen.

Figur 6 bis 8 zeigen Varianten des Ausführungsbeispiels von Figur 1 bis 5.

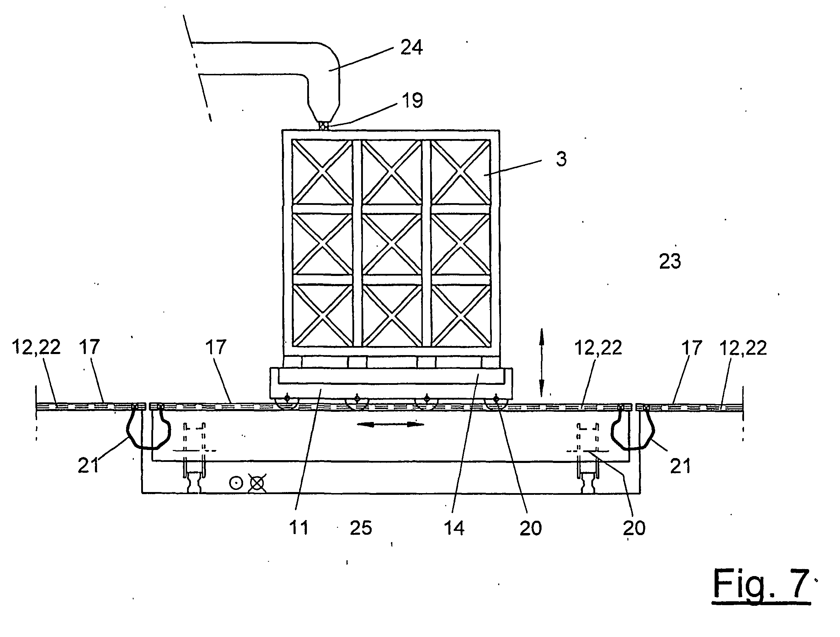

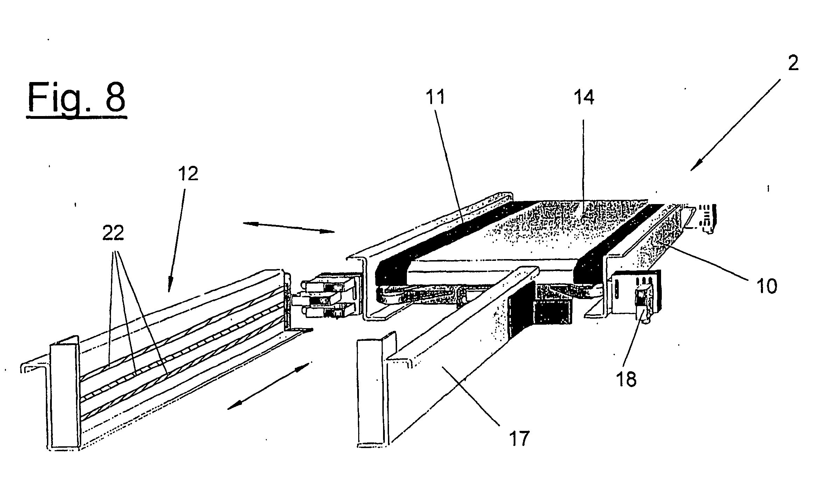

Die eine Variation besteht z.B. in einer anderen Art von Versorgungseinrichtung (12) für die Satelliten (11). Wie Figur 7 und 8 verdeutlichen, besteht die Versorgungseinrichtung (12) hier aus einem Schleifstromübertrager (22), dessen Schleifbahnen an einer der beiden seitlichen Führungen (17) oder am Boden der Lagergassen angeordnet sind. Über die Schleifbahnen werden elektrische Antriebsenergie und Steuersignale von einer an der Verschiebeeinrichtung (10) oder an anderer geeigneter Stelle positionierten Steuerung und Energieversorgung übertragen, welche vom Satellit (11) über entsprechende Bürsten oder andere Schleifkontakte aufgenommen werden. Die Ansteuerung der Schleifstromübertrager (22) kann stationär über Bodenkontakte sein. Hierbei empfiehlt es sich, über ein Bussystem mit einer Codierung die Leistungs- und Signalströme bzw. -spannungen zu steuern und gezielt die jeweiligen Satelliten (11) an ihren jeweiligen Positionen zu beaufschlagen. Hierüber ist es auch möglich, mehrere Satelliten (11) gleichzeitig in verschiedenen Lagergassen fahren und arbeiten zu lassen.

In Abwandlung ist es auch möglich, wie beim vorerwähnten Versorgungsschlepp (21) die Leistungsstrom- und Signalverbindung über den Verschiebewagen (10) herzustellen und über geeignete Schleifkontakte zwischen Verschiebewagen (10) und den stationären Schleifstromübertragern (22) in der jeweiligen angefahrenen Lagergasse gezielt eine leitende Verbindung herzustellen. Auch hierbei ist es möglich, mehrere Satelliten (11) von der Verschiebeeinrichtung (10) aus zu betreiben und zu steuern, indem nur der in der jeweils angefahrenen Lagergasse befindliche Satellit (11) mit Leistungsstrom und Signalspannung versorgt wird, während die Schleifstromübertrager (22) in den anderen Lagergassen durch die unterbrochene Übertragung abgeschaltet sind.

Figur 6 und 7 verdeutlichen außerdem eine Variante des Kannenabtaflers (8), der hier mit einer Chargiereinrichtung (23) ausgerüstet ist. Die Chargiereinrichtung (23) ermöglicht es, beim Abtafelvorgang die Kanne (3) unter einem vorzugsweise stationären Abtafelkopf (24) zweiachsig hin- und herzubewegen und dadurch das am Abtafelkopf (24) austretende Faserkabel (19) in der gewünschten Weise in der Kanne (3) zu verteilen und abzulegen.

Die Chargiereinrichtung (23) besteht aus einer Verschiebebühne (25), die quer zur Längsachse der Lagergassen und zur normalen Bewegungsrichtung der Satelliten (11) hin- und herbewegbar ist. Die Verschiebebühne (25) ist hierbei z.B. über ein Fahrwerk (20) auf stationären Schienen in einer Verschiebegrube geführt und motorisch angetrieben. Auf der Verschiebebühne (25) befindet sich mindestens eine Führung (17) bzw. ein Schienenpaar, welches ein oder mehrere Satelliten (11) mit aufgeladenen Kannen (3) aufnehmen kann und sich längs der Lagergassenachse erstreckt. Mittels einer geeigneten Versorgungseinrichtung (12) kann der Satellit (11) sich dabei auf der bühnenseitigen Führung (17) vor- und zurückbewegen. Die Fahrbewegungen der Verschiebebühne (25) und des Satelliten (11) können hierbei zur Erzielung beliebiger Chargierbewegungen kombiniert und einander überlagert werden.

Bei dieser Ausführungsform empfiehlt es sich, die in Figur 8 gezeigte Versorgungseinrichtung (12) mit einem Schleifstromübertrager (22) einzusetzen. Die Verbindung zwischen den stationären Schleifstromübertragern (22) in der Lagergasse und den Schleifstromübertragern (22) auf der Verschiebebühne (25) kann über einen Kabelschlepp (21) geschaffen werden, welcher den Bühnenbewegungen folgen kann.

Abwandlungen der gezeigten Ausführungsform sind in verschiedener Weise möglich. Zum einen kann die Ausbildung des Kannenlagers (1) beliebig variieren. Es können mehr oder weniger Lager- oder Abzugsbereiche (4,5,6) sein. Das Kannenlager (1) kann alternativ auch als reines Lager ausgebildet sein und nur Lagerbereiche (4,5) aufweisen. Die Zahl und Anordnung der einzelnen Lagergassen und die Ausbildung des Kannengatters (7) kann ebenfalls variieren. Gegebenenfalls können zusätzlich oder alternativ auch ein oder mehrere Faserbehandlungseinrichtungen vorhanden sein. Das gleiche gilt auch für die Abzugseinrichtung (9).

Auch der Satellitenförderer (2) kann abgewandelt werden. Zum einen kann die Verschiebeeinrichtung (10) auch in beliebig anderer Weise ausgebildet sein und hierbei insbesondere auch eine andere Bewegungsbahn besitzen. Sie kann zum Beispiel als Drehscheibe gestaltet sein und sternförmig um deren Mittelpunkt angeordnete Lagergassen bedienen. Die Verschiebeeinrichtung (10) kann ansonsten auch jede beliebige andere technische Ausbildung und Gestaltung ihrer Bewegungsbahn haben. Gleiches gilt auch für die Verschiebebühne (25). Variabel sind zudem die Ausgestaltungen des Satelliten (11) und der Führungen (17). Statt eines mit Rädern versehenen Fahrwerks (20) können auch andere geeignete Bewegungsmittel, wie Luftkissen oder dergleichen, Verwendung finden. Auch die Hubeinrichtung (14) kann in beliebig geeigneter Weise ausgebildet sein.

Abwandelbar sind ferner die Art der Versorgungseinrichtung (12) und der übertragenen Medien. Statt der bevorzugten elektrischen Übertragung von Antriebsenergie und Steuersignalen können alternativ oder zusätzlich andere Medien, wie Druckluft, Hydrauliköl oder dgl. mit geeigneten Leitungen und Anschlüssen übertragen werden.

### BEZUGSZEICHENLISTE

- 1: Kannenlager
- 2: Fördereinrichtung, Satellitenförderer
- 3: Kanne
- 4: Lagerbereich, leere Kannen
- 5: Lagerbereich, leere Kannen
- 6: Abzugsbereich
- 7: Kannengatter
- 8: Kannenabtafler
- 9: Abzugeinrichtung
- 10: Verschiebeeinrichtung, Verschiebewagen
- 11: Satellit
- 12: Versorgungseinrichtung
- 13: Wickeleinrichtung
- 14: Hubeinrichtung
- 15: Lagerposition
- 16: Lagerposition
- 17: Führung, Schiene
- 18: Sensorik
- 19: Faserkabel
- 20: Fahrwerk
- 21: Kabelschlepp, Versorgungsschlepp
- 22: Schleifstromübertrager
- 23: Chargiereinrichtung
- 24: Abtafelkopf
- 25: Verschiebebühne

## Patentansprüche

1. Kannenlager mit mindestens einer Fördereinrichtung (2) für Kannen (3) zur Aufnahme von Fasermaterial, wobei das Kannenlager (1) mindestens einen Lagerbereich (4,5) aufweist und wobei an das Kannenlager (1) ein Kannenabtafler (8) und eine Faserbehandlungseinrichtung für das Fasermaterial (19) anschließbar sind, **dadurch gekennzeichnet, dass** das Kannenlager (1) ein oder mehrere Lagerbereiche (4,5) für leere Kannen aufweist, wobei der Lagerbereich (4,5) ein regelmäßiges Kannengatter (7) mit Lagerpositionen (15,16) zur Positionierung der Kannen (3) besitzt, wobei der Kannenabtafler (8) im Lagerbereich (4) angeordnet ist und die Fördereinrichtung (2) als Satellitenförderer ausgebildet ist.

2. Kannenlager nach Anspruch 1, **dadurch gekennzeichnet, dass** das Kannenlager (1) einen Abzugsbereich (6) mit einem regelmäßigen Kannengatter (7) und mit Lagerpositionen (15,16) für befüllte Kannen (3) sowie eine Abzugeinrichtung (9) aufweist.

3. Kannenlager nach Anspruch 1 oder 2, **dadurch gekennzeichnet, dass** die Kannengatter (7) stationäre Führungen (17) für die Abstützung der Kannen (3) in den Lager- und/oder Abzugsbereichen (9, 5, 6) aufweist.

4. Kannenlager nach Anspruch 1, 2 oder 3, **dadurch gekennzeichnet, dass** das Kannengatter (7) ein oder mehrere nebeneinander liegende Lagergassen mit den Lagerpositionen (15,16) aufweist.

5. Kannenlager nach einem der vorhergehenden Ansprüche, **dadurch gekennzeichnet, dass** im Abzugsbereich (6) ein oder mehrere Gassenpaare angeordnet sind, denen die Betriebsmodi Abzugsbetrieb und Lade/Entladebetrieb abwechseln.

6. Kannenlager nach einem der vorhergehenden Ansprüche, **dadurch gekennzeichnet, dass** das Kannenlager (1) mehrere Lager- und/oder Abzugsbereiche (4,5,6) aufweist, zwischen denen jeweils ein Satellitenförderer angeordnet ist, der mehrere Bereiche (4,5,6) bedient.

7. Kannenlager nach einem der vorhergehenden Ansprüche, **dadurch gekennzeichnet, dass** der Satellitenförderer (2) eine Verschiebeeinrichtung (10) und mindestens einen Satelliten (11) aufweist, der quer zur Verschiebeeinrichtung (10) im Kannengatter (7) verfahrbar ist.

8. Kannenlager nach Anspruch 7, **dadurch gekennzeichnet, dass** der Satellit (11) eine Hubeinrichtung (14) zum Aufnehmen und Absetzen der Kannen (3) aufweist.

9. Kannenlager nach Anspruch 7 oder 8, **dadurch gekennzeichnet, dass** der Satellit (11) nach zwei Seiten quer zur Verschiebeeinrichtung (10) verfahrbar ist.

10. Kannenlager nach einem der vorhergehenden Ansprüche, **dadurch gekennzeichnet, dass** die Verschiebeeinrichtung (10) eine Versorgungseinrichtung (12) für den Satelliten (11) aufweist.

11. Kannenlager nach Anspruch 10, **dadurch gekennzeichnet, dass** die Versorgungseinrichtung (12) als Versorgungsschlepp (12) mit einer Wickeleinrichtung (13) ausgebildet ist.

12. Kannenlager nach Anspruch 10, **dadurch gekennzeichnet, dass** die Versorgungseinrichtung (12) als Schleifstromübertrager (22) ausgebildet ist.

13. Kannenlager nach einem der vorhergehenden Ansprüche, **dadurch gekennzeichnet, dass** die Verschiebeeinrichtung (10) als Verschiebewagen ausgebildet ist.

14. Kannenlager nach einem der vorhergehenden Ansprüche, **dadurch gekennzeichnet, dass** die gassenbildende Führungen (17) beidseitige Leitschienen für die Führung der Satelliten (11) und zum Absetzen der Kannen (3) aufweisen.

15. Kannenlager nach einem der vorhergehenden Ansprüche, **dadurch gekennzeichnet, dass** die Verschiebeeinrichtung (10) und/oder der Satellit (11) eine Sensorik (18) zur Positionierung an den Führungen (17) aufweist.

16. Kannenlager nach einem der vorhergehenden Ansprüche, **dadurch gekennzeichnet, dass** der Satellitenförderer (2) ein integriertes Wegemesssystem und eine angeschlossene Positionsteuerung aufweist.

17. Kannenlager nach einem der vorhergehenden Ansprüche, **dadurch gekennzeichnet, dass** das Kannenlager (1) im Bereich eines Kannenabtaflers (8) eine Chargiereinrichtung (23) für eine mehrachsige Bewegung von ein oder mehreren Satelliten (11) mit ein oder mehreren Kannen (3) aufweist.

18. Kannenlager nach Anspruch 17, **dadurch gekennzeichnet, dass** die Chargiereinrichtung (23) eine quer verfahrbare Verschiebebühne (25) mit einer Führung (17) und einer Versorgungseinrichtung (12) zum eigenständigen Bewegen des Satelliten (11) aufweist.

## Claims

1. Canning factory with at least one conveyor (2) for transporting cans (3) for receiving fibrous material, the canning factory (1) having at least one storage region (4, 5), and the canning factory (1) being adjoinable by a can filler (8) and a fibre handling device for the fibrous material (19), **characterized in that** the canning factory (1) has one or more storage regions (4, 5) for empty cans, the storage region (4, 5) having a regular can lattice (7) with storage positions (15, 16) for positioning the cans (3), the can filler (8) being arranged in the storage region (4) and the conveyor (2) being designed as a satellite conveyor.

2. Canning factory according to Claim 1, **characterized in that** the canning factory (1) has a take-off region (6) with a regular can lattice (7) and with storage positions (15, 16) for filled cans (3), and a take-off device (9).

3. Canning factory according to Claim 1 or 2, **characterized in that** the can lattice (7) has stationary guides (17) for supporting the cans (3) in the storage and/or take-off regions (4, 5, 6).

4. Canning factory according to Claim 1, 2 or 3, **characterized in that** the can lattice (7) has one or more storage aisles which are situated next to one another and contain the storage positions (15, 16).

5. Canning factory according to one of the preceding claims, **characterized in that** one or more pairs of aisles are arranged in the take-off region (6) and the operating modes of take-off operation and loading/unloading operation alternate in them.

6. Canning factory according to one of the preceding claims, **characterized in that** the canning factory (1) has a plurality of storage and/or take-off regions (4, 5, 6) between which a respective satellite conveyor which serves a plurality of regions (4, 5, 6) is arranged.

7. Canning factory according to one of the preceding claims, **characterized in that** the satellite conveyor (2) has a displacing device (10) and at least one satellite (11) which can be moved transversely to the displacing device (10) in the can lattice (7).

8. Canning factory according to Claim 7, **characterized in that** the satellite (11) has a lifting device (14) for picking up and depositing the cans (3).

9. Canning factory according to Claim 7 or 8, **characterized in that** the satellite (11) can be moved to two sides transversely to the displacing device (10).

10. Canning factory according to one of the preceding claims, **characterized in that** the displacing device (10) has a supply device (12) for the satellite (11).

11. Canning factory according to Claim 10, **characterized in that** the supply device (12) is designed as a supply tow (12) with a winding device (13).

12. Canning factory according to Claim 10, **characterized in that** the supply device (12) is designed as a collector-type current transmitter (22).

13. Canning factory according to one of the preceding claims, **characterized in that** the displacing device (10) is designed as a displacing carriage.

14. Canning factory according to one of the preceding claims, **characterized in that** the aisle-forming guides (17) have guide rails on both sides for guiding the satellites (11) and for depositing the cans (3).

15. Canning factory according to one of the preceding claims, **characterized in that** the displacing device (10) and/or the satellite (11) has a sensor arrangement (18) for positioning on the guides (17).

16. Canning factory according to one of the preceding claims, **characterized in that** the satellite conveyor (2) has an integrated displacement-measuring system and a connected position control.

17. Canning factory according to one of the preceding claims, **characterized in that** in the region of a can filler (8) the canning factory (1) has a charging device (23) for a multiaxial movement of one or more satellites (11) with one or more cans (3).

18. Canning factory according to Claim 17, **characterized in that** the charging device (23) has a transversely movable displacing platform (25) with a guide (17) and a supply device (12) for the independent movement of the satellite (11).

## Revendications

1. Stockage de contenants comprenant au moins un dispositif de transport (2) pour contenants (3) destiné à recevoir des matériaux fibreux, le stockage de contenants (1) présentant au moins une zone de stockage (4, 5), et un dispositif de pliage de contenants (8) et un dispositif de traitement des fibres pour le matériau fibreux (19) pouvant être raccordés au stockage de contenants (1),
**caractérisé en ce que**
le stockage de contenants (1) présente une ou plusieurs zones de stockage (4, 5) pour des contenants vides, la zone de stockage (4, 5) possédant une grille de contenants régulière (7) avec des positions de stockage (15, 16) pour le positionnement des contenants (3), le dispositif de pliage de contenants (8) étant disposé dans la zone de stockage (4) et le dispositif de transport (2) étant réalisé sous forme de transporteur à satellite.

2. Stockage de contenants selon la revendication 1, **caractérisé en ce que** le stockage de contenants (1) présente une zone d'extraction (6) avec une grille de contenants régulière (7) et des positions de stockage (15, 16) pour les contenants remplis (3) ainsi qu'un dispositif d'extraction (9).

3. Stockage de contenants selon la revendication 1 ou 2, **caractérisé en ce que** la grille de contenants (7) présente des guides stationnaires (17) pour supporter les contenants (3) dans les zones de stockage et/ou d'extraction (4, 5, 6).

4. Stockage de contenants selon la revendication 1, 2 ou 3, **caractérisé en ce que** la grille de contenants (7) présente une ou plusieurs voies de stockage juxtaposées avec les positions de stockage (15, 16).

5. Stockage de contenants selon l'une quelconque des revendications précédentes, **caractérisé en ce que** dans la zone d'extraction (6) sont disposées une ou plusieurs paires de voies dans lesquelles les modes de fonctionnement d'extraction et de charge/décharge alternent.

6. Stockage de contenants selon l'une quelconque des revendications précédentes, **caractérisé en ce que** le stockage de contenants (1) présente plusieurs zones de stockage et/ou d'extraction (4, 5, 6) entre lesquelles est disposé à chaque fois un transporteur à satellite, qui dessert plusieurs zones (4, 5, 6).

7. Stockage de contenants selon l'une quelconque des revendications précédentes, **caractérisé en ce que** le transporteur à satellite (2) présente un dispositif de déplacement (10) et au moins un satellite (11) qui peut être déplacé transversalement à la direction de déplacement (10) dans la grille de contenants (7).

8. Stockage de contenants selon la revendication 7, **caractérisé en ce que** le satellite (11) présente un dispositif de levage (14) pour recevoir et déposer les contenants (3).

9. Stockage de contenants selon la revendication 7 ou 8, **caractérisé en ce que** le satellite (11) peut être déplacé vers deux côtés transversalement à la direction de déplacement (10).

10. Stockage de contenants selon l'une quelconque des revendications précédentes, **caractérisé en ce que** le dispositif de déplacement (10) présente un dispositif d'alimentation (12) pour le satellite (11).

11. Stockage de contenants selon la revendication 10, **caractérisé en ce que** le dispositif d'alimentation (12) est réalisé sous forme de remorque d'alimentation (12) avec un dispositif d'enroulement (13).

12. Stockage de contenants selon la revendication 10, **caractérisé en ce que** le dispositif d'alimentation (12) est réalisé sous forme de dispositif de transfert de courant en boucle (22).

13. Stockage de contenants selon l'une quelconque des revendications précédentes, **caractérisé en ce que** le dispositif de déplacement (10) est réalisé sous forme de chariot coulissant.

14. Stockage de contenants selon l'une quelconque des revendications précédentes, **caractérisé en ce que** les guides (17) formant des voies présentent des rails conducteurs des deux côtés pour le guidage des satellites (1) et pour déposer les contenants (3).

15. Stockage de contenants selon l'une quelconque des revendications précédentes, **caractérisé en ce que** le dispositif de déplacement (10) et/ou le satellite (11) présente un système de détection (18) pour le positionnement sur les guides (17).

16. Stockage de contenants selon l'une quelconque des revendications précédentes, **caractérisé en ce que** le transporteur à satellite (2) présente un système de mesure de distance intégré et une commande de position raccordée.

17. Stockage de contenants selon l'une quelconque des revendications précédentes, **caractérisé en ce que** le stockage de contenants (1) présente, dans la région d'un dispositif de pliage de contenants (8) un dispositif de chargement (23) pour un mouvement suivant plusieurs axes d'un ou de plusieurs satellites (11) avec un ou plusieurs contenants (3).

18. Stockage de contenants selon la revendication 17, **caractérisé en ce que** le dispositif de chargement (23) présente une plate-forme de déplacement (25) pouvant être déplacée transversalement, avec un guide (17) et un dispositif d'alimentation (12) pour le déplacement autonome du satellite (11).
